# EUROPEAN PATENT APPLICATION

(11) **EP 4 525 121 A1**
(43) Date of publication of application: **19.03.2025**
(21) Application number: 23839881.2
(22) Date of filing: 07.07.2023
(51) Int. Cl.: H01M 10/0567, H01M 4/525, H01M 4/505, H01M 4/38, H01M 10/052

(54) **NON-AQUEOUS ELECTROLYTE FOR LITHIUM SECONDARY BATTERY AND LITHIUM SECONDARY BATTERY COMPRISING SAME**

(30) Priority: 12.07.2022 KR 20220085817; 06.07.2023 KR 20230087775
(71) Applicant: LG Energy Solution, Ltd., Seoul 07335 (KR)
(72) Inventor: YEOM, Chul Eun, Daejeon 34122 (KR); LEE, Chul Haeng, Daejeon 34122 (KR); LEE, Kyung Mi, Daejeon 34122 (KR); LEE, Jung Min, Daejeon 34122 (KR); JI, Su Hyeon, Daejeon 34122 (KR); HAN, Jung Gu, Daejeon 34122 (KR); CHO, Yoon Gyo, Daejeon 34122 (KR)
(74) Representative: Hoffmann Eitle
(86) International application number: PCT/KR2023/009630
(87) International publication number: WO 2024/014788

(57) **Abstract**

The present invention relates to a non-aqueous electrolyte for a lithium secondary battery and a lithium secondary battery comprising same, the non-aqueous electrolyte comprising a compound represented by chemical formula 1, a lithium salt, and an organic solvent.

## Description

### TECHNICAL FIELD

This application claims priority from Korean Patent Application Nos. 10-2022-0085817, filed on July 12, 2022, and 10-2023-0087775, filed on July 6, 2023, the disclosures of which are incorporated by reference herein.

The present invention relates to a non-aqueous electrolyte solution for a lithium secondary battery and a lithium secondary battery including the same.

### BACKGROUND ART

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte solution that becomes a medium for transferring the lithium ions is injected thereinto and the battery case is then sealed.

Since the lithium secondary battery may be miniaturized and has high energy density and working voltage, it is being used in various fields such as mobile devices, electronic products, and electric vehicles. As the field of application of the lithium secondary battery is diversified, physical property conditions required are also gradually increasing, and, specifically, development of a lithium secondary battery, which may be stably operated even under high-voltage/high-temperature conditions and has long life characteristics, is required.

In a case in which the lithium secondary battery is operated under high-voltage/high-temperature conditions, a reaction, in which PF₆⁻ anions are decomposed from a lithium salt, such as LiPF₆, contained in the electrolyte solution, may be intensified to generate a Lewis acid such as PF₅, and this reacts with moisture to generate HF. Decomposition products, such as PF₅ and HF, may not only destroy a film formed on a surface of the electrode, but also may cause a decomposition reaction of an organic solvent and may react with a decomposition product of the positive electrode active material to dissolve transition metal ions, and the dissolved transition metal ions may be electrodeposited on the negative electrode to destroy a film formed on the surface of the negative electrode.

Since performance of the battery is further degraded if the electrolyte decomposition reaction continues on the destroyed film as described above, there is a need to develop a secondary battery capable of maintaining excellent performance even under high-voltage/high-temperature conditions.

### DISCLOSURE OF THE INVENTION

### TECHNICAL PROBLEM

An aspect of the present invention provides a non-aqueous electrolyte solution, which contributes to form a strengthened film on an electrode, and a lithium secondary battery including the same.

### TECHNICAL SOLUTION

According to an aspect of the present invention, there is provided a non-aqueous electrolyte solution for a lithium secondary battery which includes: a lithium salt; an organic solvent; and a compound represented by Formula 1.

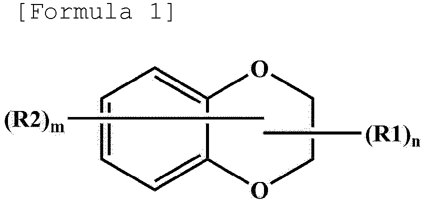

In Formula 1,
R1 is -COR, -COOR', -NCO, a nitrile group, an alkenyl group having 2 to 10 carbon atoms, or an alkynyl group having 2 to 10 carbon atoms,
R2 is a halogen group; -COR"; -COOR‴; -NCO; a nitrile group; an alkyl group having 1 to 10 carbon atoms which is unsubstituted or substituted with at least one halogen group; an alkenyl group having 2 to 10 carbon atoms; or an alkynyl group having 2 to 10 carbon atoms,
R, R', R", and R‴ are each independently hydrogen, an alkyl group having 1 to 10 carbon atoms, an alkenyl group having 2 to 10 carbon atoms, or an alkynyl group having 2 to 10 carbon atoms,
n is 1 or 2, and when n is 2, the two R1s are the same or different from each other, and
m is an integer of any one of 0 to 8-n.

According to another aspect of the present invention, there is provided a lithium secondary battery including: a positive electrode including a positive electrode active material; a negative electrode including a negative electrode active material; a separator disposed between the positive electrode and the negative electrode; and the non-aqueous electrolyte solution for a lithium secondary battery.

### ADVANTAGEOUS EFFECTS

A non-aqueous electrolyte solution according to the present invention has an effect of forming an ether-based film through an oxidation reaction at a positive electrode/negative electrode of a lithium secondary battery by including a benzodioxane-based compound containing a substituent having an unsaturated bond.

Since the ether-based film has better flexibility than a carbonate-based film, it is effective in inhibiting film collapse in a battery including a silicon (Si)-based negative electrode active material having a large volume change and may suppress continuous decomposition of an electrolyte. Also, since the benzodioxane-based compound contains a benzene ring, it rapidly reacts with reactive oxygen generated due to a structural change of a positive electrode active material under high-voltage operating conditions to suppress an oxidation reaction of the electrolyte, and thus, it may eventually provide a lithium secondary battery with improved electrochemical properties.

### MODE FOR CARRYING OUT THE INVENTION

Hereinafter, the present invention will be described in more detail.

In general, anions included in a lithium salt, such as LiPF₆, which is widely used in an electrolyte solution for a lithium secondary battery, form decomposition products, such as hydrogen fluoride (HF) and PF₅, due to thermal decomposition or moisture. These decomposition products have acidic properties and deteriorate a film or electrode surface in the battery.

Transition metals in a positive electrode are easily dissolved into the electrolyte solution due to the decomposition products of the electrolyte solution and structural changes of the positive electrode according to repeated charge and discharge, and the dissolved transition metals are re-deposited on the positive electrode to increase resistance of the positive electrode. In addition, in a case in which the dissolved transition metals move to a negative electrode through the electrolyte solution, the dissolved transition metals are electrodeposited on the negative electrode to cause destruction of a solid electrolyte interphase (SEI) film and an additional electrolyte decomposition reaction, and, as a result, problems, such as consumption of lithium ions and an increase in resistance, occur.

Furthermore, a protective film is formed on the positive electrode and the negative electrode by an electrolyte solution reaction during initial activation of the battery, wherein, in a case in which the film becomes unstable for the above reason, additional decomposition of the electrolyte solution occurs during charge-discharge or high-temperature exposure to promote degradation of the battery and generate gas.

As demand for a high-performance lithium secondary battery has increased, it is necessary to introduce a Si-based negative electrode active material having much higher theoretical capacity than graphite in order to increase energy density. However, since the Si-based negative electrode active material has a very high rate of change in volume in comparison to the graphite, it is necessary to form a film having flexible properties as well as high durability on the negative electrode in order to compensate for this disadvantage.

An operating voltage required for improving energy density is also increased, wherein there is a problem in that the above-described electrolyte solution decomposition reaction and the resulting degradation of battery performance are further intensified during operation under high voltage.

In order to solve these problems, the present inventors included the compound represented by Formula 1 in the non-aqueous electrolyte solution, and, accordingly, found that the decomposition reaction of the electrolyte solution may be reduced and the dissolution of transition metal and the gas generation may be suppressed.

Specifically, since a benzodioxane-based compound represented by the following Formula 1 includes an organic structure having an unsaturated bond, it has an effect of improving durability of the film by causing a polymerization reaction through a reaction with radicals generated by direct electrolysis or electrolyte decomposition on the surface of the electrode and may form a flexible polymer film including an ether structure through decomposition of a ring structure containing oxygen, that is, dioxane, and thus, it was confirmed that long lifetime may be achieved even in a battery in which the Si-based negative electrode active material having a large volume change was used.

In a case in which the battery is operated at a high voltage to increase the energy density, there is a problem in that an electrolyte decomposition rate is increased as reactive oxygen is removed due to structural collapse of the positive electrode.

However, the present inventors have confirmed that, in a case in which the compound represented by the following Formula 1 is included in the non-aqueous electrolyte solution, since a benzene-ring structure included in the compound may react with the reactive oxygen faster than an electrolyte, decomposition of the electrolyte is suppressed and long lifetime may be achieved even at a high operating voltage of 4.25 V or more, specifically, 4.3 V or more.

Hereinafter, each component constituting the present invention will be described in more detail.

### Non-aqueous Electrolyte Solution

The present invention provides a non-aqueous electrolyte solution for a lithium secondary battery which includes: a lithium salt; an organic solvent; and a compound represented by Formula 1.

Hereinafter, each component will be described in detail.

### (1) Compound Represented by Formula 1

The non-aqueous electrolyte solution of the present invention includes a compound represented by Formula 1 below.

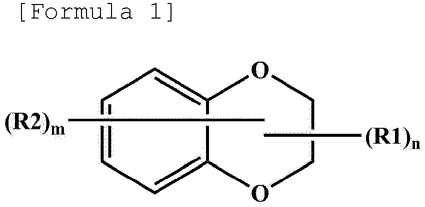

In Formula 1,
R1 is -COR, -COOR', -NCO, a nitrile group, an alkenyl group having 2 to 10 carbon atoms, or an alkynyl group having 2 to 10 carbon atoms,
R and R' are each independently hydrogen, an alkyl group having 1 to 10 carbon atoms, an alkenyl group having 2 to 10 carbon atoms, or an alkynyl group having 2 to 10 carbon atoms,
R2 is a halogen group; or an alkyl group having 1 to 10 carbon atoms which is unsubstituted or substituted with at least one halogen group,
n is 1 or 2, and when n is 2, the two R1s are the same or different from each other, and
m is an integer of any one of 0 to 8-n.

A ring structure containing oxygen in benzodioxane of Formula 1 increases flexibility of a polymer included in the film while being decomposed to minimize decomposition of the film at high temperatures, and a benzene ring structure increases physical strength of the film and simultaneously has an effect of suppressing electrolyte decomposition by reacting with active oxygen.

However, in a case in which a substituent is not contained in a dioxane ring, or a halogen group or oxygen (=O) is substituted, a product in the form of a gas may be generated due to decomposition of dioxane, wherein, in a case in which the R1 substituent is included as in the compound of Formula 1, durability of the film may be enhanced through formation of a cross-linked polymer while a gas generation amount is reduced. Specifically, a carbon-to-carbon multiple bond of R1, or a carbon-to-heteroatom multiple bond may contribute to increase density of the film that is formed on an electrode through polymerization.

Also, a benzene ring in the benzodioxane of Formula 1 plays a role in scavenging a reactive oxygen compound by binding thereto, wherein, since the R1 substituent is substituted on the dioxane ring instead of the benzene ring, it is desirable in that the above effect may be achieved without interfering with the reactive oxygen scavenging role.

In an embodiment of the present invention, R1 in Formula 1 may be -COR, -COOR', -NCO, or a nitrile group.

Also, R and R' may each independently be an alkyl group having 1 to 10 carbon atoms or an alkynyl group having 2 to 10 carbon atoms, and may preferably be a methyl group or a propargyl group. Preferably, R1 in Formula 1 is -COR or - COOR', and R and R' may be an alkenyl group having 2 to 10 carbon atoms or an alkynyl group having 2 to 10 carbon atoms. As described above, in a case in which a multiple bond is substituted for -CO- or -COO-, it is advantageous to form a film containing oxygen, and there is an effect of improving ionic conductivity and reducing battery resistance because hopping of lithium ions is improved due to an unshared electron pair of oxygen. Furthermore, in a case in which the carbon-to-carbon multiple bond is contained, since it is advantageous in forming a cross-linked polymer through decomposition in comparison to a substituent containing a carbon-to-nitrogen multiple bond such as -NCO and a nitrile group, a resistance increase rate of the battery may be reduced.

R1 in Formula 1 may be -COCH₃, -COO(CH₂)CCH, -NCO, or a nitrile group, and may more preferably be -COO(CH₂)CCH.

In another embodiment of the present invention, while R1 in Formula 1 is a substituent containing a carbon-to-carbon multiple bond, that is, -COR, -COOR', an alkenyl group having 2 to 10 carbon atoms, or an alkynyl group having 2 to 10 carbon atoms, R and R' may each independently be an alkenyl group having 2 to 10 carbon atoms or an alkynyl group having 2 to 10 carbon atoms.

In an embodiment of the present invention, the compound represented by Formula 1 may be represented by Formula 1-1 below.

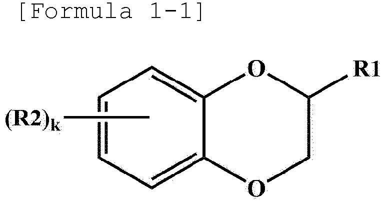

In Formula 1-1,
R1 and R2 are as defined in Formula 1, and
k is an integer of 0 to 4.

In an embodiment of the present invention, R2 may be the same substituent as R1, fluorine; or an alkyl group having 1 to 10 carbon atoms which is substituted with at least one fluorine, and k may be 0 or 1. In a case in which R2 is substituted on the benzene ring as described above, it is preferable in terms of being able to enhance the durability of the film as the density of the film formed on the electrode is increased.

In an embodiment of the present invention, Formula 1 may be represented by any one of Formulae 1A to 1D below, and may preferably be represented by Formula 1A. Since a structure of Formula 1A includes a carbon-to-carbon multiple bond, it is preferable in terms of being able to enhance the durability of the film on the electrode as described above.

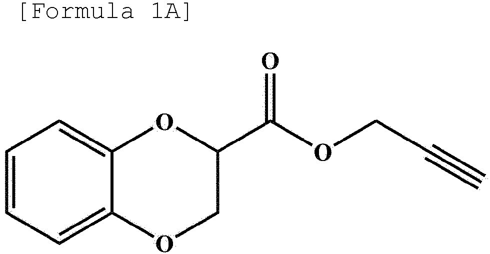

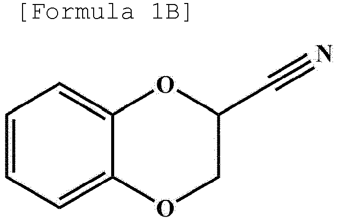

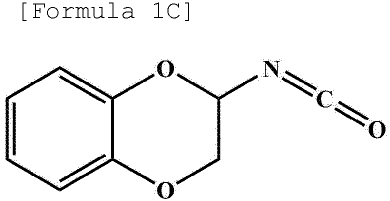

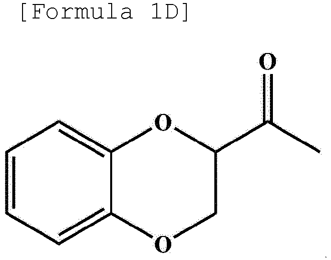

In terms of sufficiently achieving the above-described addition effect, an amount of the compound represented by Formula 1 may be 0.1 wt% or more, preferably 0.15 wt% or more, and more preferably 0.2 wt% or more based on a total weight of the non-aqueous electrolyte solution.

However, in terms of preventing a rapid increase in resistance due to excessive film formation, the amount of the compound represented by Formula 1 may be 5 wt% or less, preferably 3 wt% or less, and more preferably 1 wt% or less based on the total weight of the non-aqueous electrolyte solution.

Most preferably, the amount of the compound represented by Formula 1 may be 0.2 wt% or more and 0.5 wt% or less.

### (2) Additive

In order to prevent the electrolyte solution from being decomposed to cause collapse of the electrode in a high-voltage environment, or further improve low-temperature high-rate discharge characteristics, high-temperature stability, overcharge protection, and a battery swelling suppression effect at high temperatures, the non-aqueous electrolyte solution of the present invention may optionally further include the following additives, if necessary.

The additive may be at least one selected from the group consisting of a cyclic carbonate-based compound, a sultone-based compound, a sulfate-based compound, a phosphorus-based compound, a nitrile-based compound, an amine-based compound, a silane-based compound, a benzene-based compound, and a lithium salt-based compound.

The cyclic carbonate-based compound may be at least one selected from the group consisting of vinylene carbonate (VC), vinyl ethylene carbonate (VEC), and fluoroethylene carbonate (FEC), and may specifically be vinylene carbonate.

The sultone-based compound is a material capable of forming a stable SEI film by a reduction reaction on the surface of the negative electrode, wherein the sultone-based compound may be at least one selected from the group consisting of 1,3-propane sultone (PS), 1,4-butane sultone, ethane sultone, prop-1-ene-1,3-sultone (PRS), 1,4-butene sultone, and 1-methyl-1,3-propene sultone, and may specifically be 1,3-propane sultone (PS) or prop-1-ene-1,3-sultone (PRS).

The sulfate-based compound is a material which may be electrically decomposed on the surface of the negative electrode to form a stable SEI film that does not crack even during high-temperature storage, wherein the sulfate-based compound may be at least one selected from the group consisting of ethylene sulfate (Esa), trimethylene sulfate (TMS), and methyl trimethylene sulfate (MTMS).

The phosphorus-based compound may be a phosphate-based or phosphite-based compound, and specifically, may be at least one selected from the group consisting of tris(trimethylsilyl)phosphate, tris(trimethylsilyl)phosphite, tris(2,2,2-trifluoroethyl)phosphate, and tris(trifluoroethyl)phosphite.

The nitrile-based compound may be at least one selected from the group consisting of succinonitrile (SN), adiponitrile (ADN), acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl) ether (ASA3), 1,3,6-hexanetricarbonitrile (HTCN), 1,4-dicyano 2-butene (DCB), and 1,2,3-tris(2-cyanoethyl)propane (TCEP).

The amine-based compound may be at least one selected from the group consisting of triethanolamine and ethylenediamine, and the silane-based compound may be tetravinylsilane.

The benzene-based compound may be at least one selected from the group consisting of monofluorobenzene, difluorobenzene, trifluorobenzene, and tetrafluorobenzene.

The lithium salt-based compound is a compound different from the lithium salt included in the non-aqueous electrolyte solution, wherein the lithium salt-based compound may be at least one compound selected from the group consisting of lithium difluorophosphate (LiDFP; LiPO₂F₂), lithium bis(oxalato)borate (LiBOB; LiB (C₂O₄)₂), lithium tetrafluoroborate (LiBF₄), lithium tetraphenylborate, lithium difluoro(oxalato)borate (LiDFOB), and lithium difluorobis(oxalato)phosphate (LiDFOP).

Preferably, the non-aqueous electrolyte solution according to an embodiment of the present invention may further include at least one additive selected from the group consisting of vinylene carbonate (VC), vinyl ethylene carbonate (VEC), fluoroethylene carbonate (FEC), succinonitrile (SN), 1,3,6-hexanetricarbonitrile (HTCN), lithium difluoro(oxalato)borate (LiDFOB), lithium tetrafluoroborate (LiBF₄), 1,3-propane sultone (PS), prop-1-ene-1,3-sultone (PRS), ethylene sulfate (Esa), and lithium difluorophosphate (LiDFP), and may more preferably include fluoroethylene carbonate. In this case, since the additive may increase the film durability and may simultaneously decrease the resistance by forming the film on the positive electrode and the negative electrode together with the compound represented by Formula 1, the battery performance may be improved.

An amount of the additive may be in a range of 0.1 wt% to 10 wt%, preferably, 0.2 wt% to 5 wt% based on the total weight of the non-aqueous electrolyte solution. When the amount of the additive is within the above range, there is an effect of suppressing a side reaction through film formation on the positive electrode and the negative electrode.

### (3) Organic Solvent

The non-aqueous electrolyte solution of the present invention includes an organic solvent.

Various organic solvents typically used in a lithium electrolyte may be used as the organic solvent without limitation. For example, the organic solvent may be a cyclic carbonate-based solvent, a linear carbonate-based solvent, a linear ester-based solvent, a cyclic ester-based solvent, a nitrile-based solvent, or a mixture thereof, may preferably include a mixture of at least two selected from the group consisting of a cyclic carbonate-based solvent, a linear carbonate-based solvent, and a linear ester-based solvent, and may more preferably include a mixture of a cyclic carbonate-based solvent and a linear carbonate-based solvent.

The cyclic carbonate-based solvent may well dissociate a lithium salt in the electrolyte due to high permittivity as a highly viscous organic solvent, wherein the cyclic carbonate-based solvent may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, preferably, may include ethylene carbonate (EC) or propylene carbonate (PC).

Also, the linear carbonate-based solvent is an organic solvent having low viscosity and low permittivity, wherein the linear carbonate-based solvent may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and may preferably include ethyl methyl carbonate (EMC), dimethyl carbonate (DMC), or diethyl carbonate (DEC).

In order to prepare an electrolyte solution having high ionic conductivity, it is desirable that a mixture of the cyclic carbonate-based solvent and the linear carbonate-based solvent is used as the organic solvent.

The linear ester-based solvent may be at least one selected from the group consisting of methyl acetate, ethyl acetate, propyl acetate, methyl propionate, ethyl propionate, propyl propionate, and butyl propionate, and may preferably be methyl propionate, ethyl propionate, or propyl propionate.

The cyclic ester-based solvent may be at least one selected from the group consisting of γ-butyrolactone, γ-valerolactone, γ-caprolactone, σ-valerolactone, and ε-caprolactone.

The nitrile-based solvent may be at least one selected from the group consisting of succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may preferably be succinonitrile.

A remainder excluding other components except for the organic solvent, for example, the amounts of the compound represented by Formula 1, the additive, and the lithium salt, in the total weight of the non-aqueous electrolyte solution may all be the organic solvent unless otherwise stated.

### (4) Lithium Salt

The non-aqueous electrolyte solution of the present invention includes a lithium salt.

Any lithium salt typically used in an electrolyte solution for a lithium secondary battery may be used as the lithium salt without limitation, and, specifically, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may be at least one selected from the group consisting of LiPF₆, LiClO₄, LiBF₄, lthium bis (fluorosulfonyl) imide (LiN(FSO₂)₂; LiFSI), lithium bis(trifluoromethanesulfonyl)imide (LiTFSI), lithium bis(pentafluoroethanesulfonyl)imide (LiBETI), lithium trifluoromethanesulfonate (LiSO₃CF₃), lithium difluorophosphate (LiPO₂F₂), lithium bis (oxalate)borate (LiBOB), lithium difluoro(oxalate)borate (LiFOB), lithium difluoro (bisoxalato)phosphate (LiDFOP), lithium tetrafluoro(oxalate)phosphate (LiTFOP), and lithium fluoromalonato(difluoro)borate (LiFMDFB), and may preferably be LiPF₆.

In an embodiment of the present invention, a concentration of the lithium salt in the non-aqueous organic solution containing the lithium salt and the organic solvent may be in a range of 0.5 M to 4.0 M, particularly 0.5 M to 3.0 M, and more particularly 0.8 M to 2.0 M. When the concentration of the lithium salt is within the above range, adequate electrolyte impregnability may be obtained by preventing excessive increases in viscosity and surface tension while sufficiently securing an effect of improving low-temperature output and improving cycle characteristics.

### Lithium Secondary Battery

Next, a lithium secondary battery according to the present invention will be described.

The lithium secondary battery according to the present invention includes a positive electrode including a positive electrode active material, a negative electrode including a negative electrode active material, a separator disposed between the positive electrode and the negative electrode, and a non-aqueous electrolyte solution. In this case, the non-aqueous electrolyte solution is the above-described non-aqueous electrolyte solution according to the present invention. Since the non-aqueous electrolyte solution has been described above, a description thereof will be omitted and other components will be described below.

### (1) Positive Electrode

The positive electrode according to the present invention includes a positive electrode active material, and may be prepared by coating a positive electrode collector with a positive electrode slurry including the positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel; aluminum; nickel; titanium; fired carbon; or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from the group consisting of LCO (LiCoO₂); LNO (LiNiO₂); LMO (LiMnO₂); LiMn₂O₄; LiCoPO₄; LFP (LiFePO₄); and a lithium composite transition metal oxide containing nickel (Ni), cobalt (Co), and manganese (Mn).

The positive electrode active material may have a molar ratio of nickel among transition metals of 60 mol% or more, preferably 70 mol% or more, and more preferably 80 mol% or more.

In an embodiment of the present invention, the lithium composite transition metal oxide may be a compound represented by Formula 2 below. That is, the positive electrode active material according to an embodiment of the present invention may include a lithium composite transition metal oxide represented by Formula 2 below.

[Formula 2] Li₁₊ₓ(NiₐCo_{b}Mn_{c}M_{d})O₂

In Formula 2,
M is at least one selected from the group consisting of tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and
1+x, a, b, c, and d are atomic fractions of each independent elements,
wherein -0.2≤x≤0.2, 0.6≤a<1, 0<b≤0.3, 0<c≤0.3, 0≤d≤0.1, and a+b+c+d=1.

1+x represents a molar ratio of lithium in the lithium composite transition metal oxide, wherein x may satisfy - 0.1≤x≤0.2 or 0≤x≤0.2. When the molar ratio of the lithium satisfies the above range, a crystal structure of the lithium composite transition metal oxide may be stably formed.
a represents a molar ratio of nickel among total metals excluding lithium in the lithium composite transition metal oxide, wherein a may satisfy 0.70≤a<1, 0.75≤a<1, or 0.80≤a<1. When the molar ratio of the nickel satisfies the above range, since high energy density may be exhibited, high capacity may be achieved.
b represents a molar ratio of cobalt among the total metals excluding lithium in the lithium composite transition metal oxide, wherein b may satisfy 0<b≤0.20, 0<b≤0.18, or 0<b≤0.15. When the molar ratio of the cobalt satisfies the above range, good resistance characteristics and output characteristics may be achieved.
c represents a molar ratio of manganese among the total metals excluding lithium in the lithium composite transition metal oxide, wherein c may satisfy 0<c≤0.20, 0<c≤0.18, or 0<c≤0.15. When the molar ratio of the manganese satisfies the above range, structural stability of the positive electrode active material is excellent.

In an embodiment of the present invention, the lithium composite transition metal oxide may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo. In other words, d representing a molar ratio of the doping element among the total metals excluding lithium in the lithium composite transition metal oxide may satisfy 0<d≤0.10, 0<d≤0.08, or 0<d≤0.05.

Preferably, a, b, c, and d in Formula 2 may satisfy 0.70≤a<1, 0<b≤0.2, 0<c≤0.2, and 0≤d≤0.1, respectively.

In another embodiment of the present invention, the lithium composite transition metal oxide may be at least one selected from the group consisting of LiₚMn_{1-q}M_{q}A₂, LiₚMn₂O₄₋ᵣXᵣ, LiₚMn_{2-q}M_{q}M'ᵣA₄, LiₚCo_{1-q}M_{q}A₂, LiₚCo_{1-q}M_{q}O₂₋ᵣXᵣ, LiₚNi_{1-q}M_{q}O₂₋ᵣXᵣ, LiₚNi_{1-q}Co_{q}O₂₋ᵣXᵣ, LiₚNi_{1-q-r}CO_{q}MᵣA_{w}, LiₚNi_{1-q-r}CO_{q}MᵣO_{2-w}X_{w}, LiₚNi_{1-q-r}Mn_{q}MᵣA_{w}, and LiₚNi_{1-q-r}Mn_{q}MᵣO_{2-w}X_{w}, wherein p, q, r, and w satisfy 0.9≤p≤1.2, 0≤q≤1, 0≤r≤1, and 0≤w≤2, respectively, M and M' are the same or different from each other and are one or more elements selected from the group consisting of Mg, Al, Co, potassium (K), sodium (Na), Ca, silicon (Si), Ti, tin (Sn), V, germanium (Ge), Ga, B, arsenic (As), Zr, Mn, Cr, Fe, Sr, V, and rare earth elements, A is at least one element selected from the group consisting of oxygen (O), fluorine (F), sulfur (S), and phosphorus (P), and X is at least one element selected from the group consisting of F, S and P.

The positive electrode active material may be included in an amount of 80 wt% to 99 wt%, specifically, 90 wt% to 99 wt% based on a total weight of solid content in the positive electrode slurry. In a case in which the amount of the positive electrode active material is 80 wt% or less, since energy density is reduced, capacity may be reduced.

The binder is a component that assists in the binding between the active material and the conductive agent and in the binding with the current collector, wherein the binder may be commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

Also, the conductive agent is a material providing conductivity without causing adverse chemical changes in the battery, wherein it may be added in an amount of 0.5 wt% to 20 wt% based on the total weight of the solid content in the positive electrode slurry.

The conductive agent, for example, may be selected from a conductive material, such as: carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as fluorocarbon powder, aluminum powder, and nickel powder; conductive whiskers such as zinc oxide whiskers and potassium titanate whiskers; conductive metal oxide such as titanium oxide; and polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry including the positive electrode active material, the binder, and the conductive agent is in a range of 40 wt% to 90 wt%, preferably, 50 wt% to 80 wt%.

### (2) Negative Electrode

The negative electrode according to the present invention includes a negative electrode active material, and may be prepared by coating a negative electrode collector with a negative electrode slurry including the negative electrode active material, a binder, a conductive agent, and a solvent, and then drying and rolling the coated negative electrode collector.

The negative electrode collector generally has a thickness of 3 µm to 500 µm. The negative electrode collector is not particularly limited so long as it has high conductivity without causing adverse chemical changes in the battery, and, for example, copper; stainless steel; aluminum; nickel; titanium; fired carbon; copper or stainless steel that is surface-treated with one of carbon, nickel, titanium, silver, or the like; or an aluminum-cadmium alloy may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

In an embodiment of the present invention, the negative electrode active material may include a silicon-based material, and may preferably consist of silicon, that is, may be pure Si.

The silicon-based material is at least one selected from the group consisting of Si, SiOₓ (0<x<2), and a Si-Y alloy (where Y is an element selected from the group consisting of alkali metal, alkaline earth metal, a Group 13 element, a Group 14 element, transition metal, a rare earth element, and a combination thereof, and may not be Si), and is preferably Si. The element Y may be selected from the group consisting of Mg, Ca, Sr, barium (Ba), radium (Ra), Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, lead (Pb), ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, As, antimony (Sb), bismuth (Bi), S, selenium (Se), tellurium (Te), polonium (Po), and a combination thereof. With respect to Si, it has an advantage of having higher theoretical capacity than SiOₓ.

Since the silicon-based negative electrode active material has capacity that is nearly 10 times higher than that of graphite, it may improve rapid charging performance of the battery by reducing a mass loading (mg·cm⁻²). However, since a lithium ion loss rate due to an irreversible reaction is high and a volume change is large, there is a problem in that it may adversely affect lifetime, wherein this problem may be solved by using the above-described non-aqueous electrolyte solution. Specifically, with respect to the negative electrode containing the silicon-based negative electrode active material, there is a problem in that a reaction, in which an SEI film is easily broken and regenerated, continuously occurs due to a large volume change during charge and discharge in comparison to a negative electrode containing only a carbon-based negative electrode active material, wherein, since the SEI film may be strengthened as described above when the non-aqueous electrolyte solution according to the present invention is used, this problem may be effectively solved.

In an embodiment of the present invention, the silicon-based material may be included in an amount of 5 wt% to 100 wt%, preferably 50 wt% to 100 wt%, and more preferably 100 wt% based on a total weight of the negative electrode active material. When the silicon-based material is included in the above range, there is an effect of increasing capacity of the negative electrode.

Furthermore, in addition to the silicon-based material, the negative electrode active material may include at least one selected from the group consisting of a carbon material capable of reversibly intercalating/deintercalating lithium ions; metal or an alloy of lithium and the metal; a metal composite oxide; a material which may be doped and undoped with lithium; lithium metal; and a transition metal oxide.

As the carbon material, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon), hard carbon, mesophase pitch carbide, and fired cokes.

As the metal or the alloy of lithium and the metal, a metal selected from the group consisting of Cu, Ni, Na, K, rubidium (Rb), cesium (Cs), francium (Fr), beryllium (Be), Mg, Ca, Sr, Si, Sb, Pb, In, Zn, Ba, Ra, Ge, Al, and Sn, or an alloy of lithium and the metal may be used.

At least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, or Ge; Me': Al, B, P, Si, Groups I, II and III elements of the periodic table, or halogen; 0<x≤1; 1≤y≤3; 1≤ z≤8) may be used as the metal composite oxide.

The material, which may be doped and undoped with lithium, may include Sn, SnO₂, and Sn-Y' (where Y is an element selected from the group consisting of alkali metal, alkaline earth metal, a Group 13 element, a Group 14 element, transition metal, a rare earth element, and a combination thereof, and is not Sn). The element Y' may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Si, In, Ge, P, As, Sb, Bi, S, Se, Te, Po, and a combination thereof.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The conductive agent is a component for further improving the conductivity of the negative electrode active material, wherein the conductive agent may be added in an amount of 0.5 wt% to 20 wt% based on the total weight of the solid content in the negative electrode slurry. Any conductive agent may be used without particular limitation so long as it has conductivity without causing adverse chemical changes in the battery, and, for example, it may be selected from a conductive material, such as: carbon black such as acetylene black, Ketjen black, channel black, furnace black, lamp black, or thermal black; graphite powder such as natural graphite, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives.

The solvent of the negative electrode slurry may include water; or an organic solvent, such as NMP and alcohol, and may be used in an amount such that desirable viscosity is obtained when the negative electrode active material, the binder, and the conductive agent are included. For example, the solvent may be included in an amount such that a concentration of a solid content in the slurry including the negative electrode active material, the binder, and the conductive agent is in a range of 30 wt% to 80 wt%, preferably, 40 wt% to 70 wt%.

### (3) Separator

The lithium secondary battery according to the present invention includes a separator between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution and excellent safety as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The lithium secondary battery according to the present invention as described above may be suitably used in portable devices, such as mobile phones, notebook computers, and digital cameras; and electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

### <Examples: Preparation of Non-aqueous Electrolyte Solutions>

### Example 1.

A non-aqueous organic solution was prepared by mixing ethylene carbonate (EC) and ethyl methyl carbonate (EMC) in a volume ratio of 30:70 and dissolving LiPF₆ such that a concentration of the LiPF₆ was 1.2 M. 100 wt% of a non-aqueous electrolyte solution was prepared by mixing 0.2 wt% of the compound represented by Formula 1A, 2 wt% of vinylene carbonate (VC), 5 wt% of fluoroethylene carbonate (FEC), and the non-aqueous organic solution as a remainder.

### Example 2.

A lithium secondary battery was prepared in the same manner as in Example 1 except that an amount of the compound represented by Formula 1A was changed to 1.0 wt% during the preparation of the non-aqueous electrolyte solution.

### Example 3.

A lithium secondary battery was prepared in the same manner as in Example 1 except that an amount of the compound represented by Formula 1A was changed to 5.0 wt% during the preparation of the non-aqueous electrolyte solution.

### Example 4.

A lithium secondary battery was prepared in the same manner as in Example 1 except that the compound represented by Formula 1B was used instead of the compound represented by Formula 1A during the preparation of the non-aqueous electrolyte solution.

### Example 5.

A lithium secondary battery was prepared in the same manner as in Example 4 except that an amount of the compound represented by Formula 1B was changed to 1.0 wt% during the preparation of the non-aqueous electrolyte solution.

### Example 6.

A lithium secondary battery was prepared in the same manner as in Example 4 except that an amount of the compound represented by Formula 1B was changed to 5.0 wt% during the preparation of the non-aqueous electrolyte solution.

### Example 7.

A lithium secondary battery was prepared in the same manner as in Example 1 except that the compound represented by Formula 1C was used instead of the compound represented by Formula 1A during the preparation of the non-aqueous electrolyte solution.

### Example 8.

A lithium secondary battery was prepared in the same manner as in Example 7 except that an amount of the compound represented by Formula 1C was changed to 1.0 wt% during the preparation of the non-aqueous electrolyte solution.

### Example 9.

A lithium secondary battery was prepared in the same manner as in Example 7 except that an amount of the compound represented by Formula 1C was changed to 5.0 wt% during the preparation of the non-aqueous electrolyte solution.

### Example 10.

A lithium secondary battery was prepared in the same manner as in Example 1 except that the compound represented by Formula 1D was used instead of the compound represented by Formula 1A during the preparation of the non-aqueous electrolyte solution.

### Example 11.

A lithium secondary battery was prepared in the same manner as in Example 10 except that an amount of the compound represented by Formula 1D was changed to 1.0 wt% during the preparation of the non-aqueous electrolyte solution.

### Example 12.

A lithium secondary battery was prepared in the same manner as in Example 10 except that an amount of the compound represented by Formula 1D was changed to 5.0 wt% during the preparation of the non-aqueous electrolyte solution.

### Comparative Example 1.

A lithium secondary battery was prepared in the same manner as in Example 1 except that the compound represented by Formula 1A was not added during the preparation of the non-aqueous electrolyte solution.

### Comparative Example 2.

A lithium secondary battery was prepared in the same manner as in Example 1 except that a compound represented by the following Formula Z1 was used instead of the compound represented by Formula 1A during the preparation of the non-aqueous electrolyte solution.

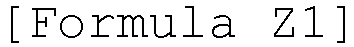

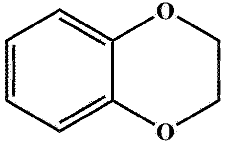

### Comparative Example 3.

A lithium secondary battery was prepared in the same manner as in Comparative Example 2 except that an amount of the compound represented by Formula Z1 was changed to 1.0 wt% during the preparation of the non-aqueous electrolyte solution.

### Comparative Example 4.

A lithium secondary battery was prepared in the same manner as in Comparative Example 2 except that an amount of the compound represented by Formula Z1 was changed to 5.0 wt% during the preparation of the non-aqueous electrolyte solution.

### Comparative Example 5.

A lithium secondary battery was prepared in the same manner as in Example 1 except that a compound represented by the following Formula Z2 was used instead of the compound represented by Formula 1A during the preparation of the non-aqueous electrolyte solution.

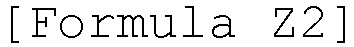

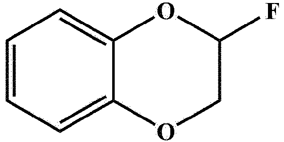

### Comparative Example 6.

A lithium secondary battery was prepared in the same manner as in Comparative Example 5 except that an amount of the compound represented by Formula Z2 was changed to 1.0 wt% during the preparation of the non-aqueous electrolyte solution.

### Comparative Example 7.

A lithium secondary battery was prepared in the same manner as in Comparative Example 5 except that an amount of the compound represented by Formula Z2 was changed to 5.0 wt% during the preparation of the non-aqueous electrolyte solution.

### Comparative Example 8.

A lithium secondary battery was prepared in the same manner as in Example 1 except that a compound represented by the following Formula Z3 was used instead of the compound represented by Formula 1A during the preparation of the non-aqueous electrolyte solution.

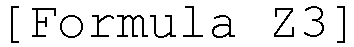

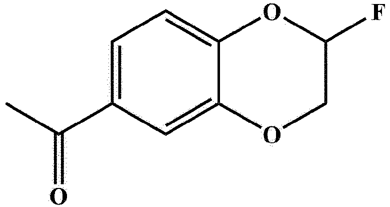

### Comparative Example 9.

A lithium secondary battery was prepared in the same manner as in Comparative Example 8 except that an amount of the compound represented by Formula Z3 was changed to 1.0 wt% during the preparation of the non-aqueous electrolyte solution.

### Comparative Example 10.

A lithium secondary battery was prepared in the same manner as in Comparative Example 8 except that an amount of the compound represented by Formula Z3 was changed to 5.0 wt% during the preparation of the non-aqueous electrolyte solution.

### <Experimental Example 1: Performance Evaluation of Battery Including 100% Si Negative Electrode Material>

### Experimental Example 1-0. Preparation of Lithium Secondary Battery

Li(Ni_{0.8}Co_{0.1}Mn_{0.1})O₂ as a positive electrode active material, a conductive agent (carbon black), and a binder (polyvinylidene fluoride) were added in a weight ratio of 97.5:1:1.5 to N-methyl-2-pyrrolidone (NMP) to prepare a positive electrode slurry (solid content: 60 wt%). A 15 µm thick aluminum (Al) thin film, as a positive electrode collector, was coated with the positive electrode slurry, dried, and then roll-pressed to prepare a positive electrode.

100% Si as a negative electrode active material, SBR-CMC as a binder, and carbon black, as a conductive agent, were added in a weight ratio of 95:3.5:1.5 to water, as a solvent, to prepare a negative electrode slurry (solid content: 60 wt%) . A 6 µm thick copper (Cu) thin film, as a negative electrode collector, was coated with the negative electrode slurry, dried, and then roll-pressed to prepare a negative electrode.

An electrode assembly was prepared by sequentially stacking the positive electrode, a polyolefin-based porous separator coated with inorganic particles (Al₂O₃), and the negative electrode.

The electrode assembly prepared was accommodated in a pouch case, and each of the non-aqueous electrolyte solutions prepared in Examples 1 to 12 and Comparative Examples 1 to 10 was injected thereinto to prepare a lithium secondary battery.

### Experimental Example 1-1. Measurement of Capacity and Resistance After High-temperature Storage

After a formation process was performed on each of the lithium secondary batteries prepared in Experimental Example 1-0, the lithium secondary batteries were constant current/constant voltage (CC/CV) charged (0.025 C cut off) at 0.33 C rate to 4.3 V at 25°C and were constant current (CC) discharged at 0.33 C rate to 2.50 V, and initial discharge capacity and initial resistance were then measured.

Thereafter, each battery was fully charged to a state of charge (SOC) of 100% under the same conditions and stored at a high temperature (60°C) for 12 weeks. Thereafter, after each battery was transferred to a charger and discharger at room temperature (25°C), capacity and resistance were measured again, capacity retention and resistance increase rate were calculated through Equations 1 and 2 below, and the results thereof are presented in Table 1 below.Capacity retention (%) = (discharge capacity after high-temperature storage/initial discharge capacity) × 100Resistance increase rate (%) = {(resistance after high-temperature storage - initial resistance)/initial resistance} × 100

### Experimental Example 1-2. Measurement of Gas Generation Amount After High-temperature Storage

After a formation process was performed on each of the lithium secondary batteries prepared in Experimental Example 1-0, the lithium secondary batteries were charged under constant current/constant voltage conditions (0.025 C cut off) at 0.33 C rate to 4.3 V at 25°C such that the lithium secondary batteries were fully charged to an SOC of 100%. After the fully-charged batteries were stored at 60°C for 12 weeks and then transferred to a charger and discharger at room temperature (25°C), gas collected in a pouch was analyzed using a gas chromatography-thermal conductivity detector (GC-TCD), and a relative gas generation amount of each battery was calculated when a gas generation amount measured in the battery including the non-aqueous electrolyte solution of Comparative Example 1 was set as 100% and presented in Table 1 below.

### Experimental Example 1-3. High-temperature Lifetime Evaluation

After a formation process was performed on each of the lithium secondary batteries prepared in Experimental Example 1-0, the lithium secondary batteries were constant current/constant voltage (CC/CV) charged (0.025 C cut off) at 0.33 C rate to 4.3 V at 45°C and were constant current (CC) discharged at 0.33 C rate to 2.5 V.

Performance of the charging/discharging once was set as one cycle, and, after the same charging/discharging was repeated 300 times, a capacity retention and a resistance increase rate (DCIR increase) were measured through Equation 3 below. Measurement results are presented in Table 1 below.Capacity retention (%) = (discharge capacity after 300 cycles/discharge capacity after one cycle} × 100Resistance increase rate (%) = {(resistance after 300 cycles - resistance after one cycle)/resistance after one cycle} × 100

**[Table 1]**

| | Formula 1 | | Experimental Example 1-1 | | Experi mental Exampl e 1-2 | Experimental Example 1-3 | |
|---|---|---|---|---|---|---|---|
| | Struct ure | Amount (wt%) | Capaci ty retent ion (%) | Resista nce increas e rate (%) | Gas genera tion amount (%) | Capac ity reten tion (%) | Resista nce increas e rate (%) |
| Example 1 | 1A | 0.2 | 94.9 | 14.6 | 43.2 | 95.7 | 10.2 |
| Example 2 | 1A | 1.0 | 93.7 | 15.2 | 41.3 | 94.2 | 12.5 |
| Example 3 | 1A | 5.0 | 92.8 | 17.3 | 39.4 | 91.3 | 15.7 |
| Example 4 | 1B | 0.2 | 86.6 | 20.1 | 63.7 | 89.7 | 17.1 |
| Example 5 | 1B | 1.0 | 84.2 | 24.8 | 61.8 | 87.3 | 18.9 |
| Example 6 | 1B | 5.0 | 82.1 | 28.3 | 60.1 | 85.2 | 20.5 |
| Example 7 | 1C | 0.2 | 82.4 | 22.6 | 68.4 | 87.4 | 16.5 |
| Example 8 | 1C | 1.0 | 80.6 | 25.5 | 67.5 | 83.5 | 17.8 |
| Example 9 | 1C | 5.0 | 75.3 | 27.3 | 65.3 | 80.8 | 25.3 |
| Example 10 | 1D | 0.2 | 83.1 | 28.1 | 76.8 | 84.3 | 17.4 |
| Example 11 | 1D | 1.0 | 81.5 | 29.9 | 75.9 | 82.3 | 19.5 |
| Example 12 | 1D | 5.0 | 78.3 | 32.5 | 73.9 | 78.5 | 25.3 |
| Comparative Example 1 | - | - | 74.8 | 35.2 | 100 | 77.4 | 21.8 |
| Comparative Example 2 | Z1 | 0.2 | 78.8 | 37.3 | 110.6 | 78.8 | 25.3 |
| Comparative Example 3 | Z1 | 1.0 | 75.3 | 39.9 | 120.5 | 76.8 | 29.4 |
| Comparative Example 4 | Z1 | 5.0 | 70.8 | 45.8 | 158.9 | 70.1 | 34.2 |
| Comparative Example 5 | Z2 | 0.2 | 80.1 | 38.3 | 130.6 | 80.1 | 27.1 |
| Comparative Example 6 | Z2 | 1.0 | 76.2 | 41.8 | 140.9 | 76.5 | 30.8 |
| Comparative Example 7 | Z2 | 5.0 | 69.8 | 48.7 | 159.8 | 68.6 | 38.9 |
| Comparative Example 8 | Z3 | 0.2 | 76.3 | 33.7 | 120.7 | 75.3 | 26.3 |
| Comparative Example 9 | Z3 | 1.0 | 70.3 | 38.4 | 128.7 | 72.1 | 29.3 |
| Comparative Example 10 | Z3 | 5.0 | 61.5 | 45.8 | 140.9 | 68.4 | 35.4 |

According to the results of Table 1, it may be confirmed that the batteries, which used the electrolyte solutions of Examples 1 to 12 including the compound of Formula 1, exhibited better results in all evaluation items, such as capacity and resistance characteristics after high-temperature storage, gas generation amount, and capacity and resistance characteristics after high-temperature cycles, than the batteries which used the electrolyte solutions of Comparative Examples 1 to 10 not including the compound of Formula 1.

Particularly, the best results were obtained when the compound of Formula 1A containing a propargyl group at a R1 position was introduced as in Examples 1 to 3.

That is, according to poor evaluation results of the batteries of Comparative Examples 2 to 4 using unsubstituted benzodioxane instead of the compound of Formula 1, Comparative Examples 5 to 7 using fluorine-substituted benzodioxane, and Comparative Examples 8 to 10 using benzodioxane having a benzene ring substituted with an acetyl group (COCH₃) as well as the battery of Comparative Example 1, in which the compound represented by Formula 1 was not added, in comparison to the batteries of Examples 1 to 12, it may be confirmed that gas generation, which may occur due to electrochemical decomposition, and the resulting degradation in battery performance may be suppressed through the introduction of the substituent.

### <Experimental Example 2: Performance Evaluation of Battery Including Graphite+Si Negative Electrode Material>

### Experimental Example 2-0. Preparation of Lithium Secondary Battery

An electrode assembly was prepared in the same manner as in Experimental Example 1-0 except that a negative electrode active material, in which 97.5 wt% of natural graphite and 2.5 wt% of Si were mixed, was used instead of the negative electrode active material of 100% Si during the preparation of the negative electrode.

The electrode assembly prepared was accommodated in a pouch case, and each of the non-aqueous electrolyte solutions prepared in Examples 1 to 4, 7, and 10 and Comparative Examples 1, 2, 5, and 8 was injected thereinto to prepare a lithium secondary battery.

### Experimental Example 2-1. Measurement of Capacity and Resistance After High-temperature Storage

A capacity retention and a resistance increase rate were obtained for each lithium secondary battery prepared in Experimental Example 2-0 by performing the same process as in Experimental Example 1-1, and the results thereof are listed in Table 2 below.

### Experimental Example 2-2. Measurement of Gas Generation Amount After High-temperature Storage

A gas generation amount after high-temperature storage was obtained for each lithium secondary battery prepared in Experimental Example 2-0 by the same process as in Experimental Example 1-2, and the results thereof are presented in Table 2 below.

### Experimental Example 2-3. High-temperature Lifetime Evaluation

High-temperature lifetime was measured for each lithium secondary battery prepared in Experimental Example 2-0 by the same process as in Experimental Example 1-3, and the results thereof are presented in Table 2 below.

**[Table 2]**

| | Formula 1 | | Experimental Example 2-1 | | Experi mental Exampl e 2-2 | Experimental Example 2-3 | |
|---|---|---|---|---|---|---|---|
| | Struc ture | Amount (wt%) | Capaci ty retent ion (%) | Resista nce increas e rate (%) | Gas genera tion amount (%) | Capaci ty retent ion (%) | Resista nce increas e rate (%) |
| Example 1 | 1A | 0.2 | 93.5 | 16.3 | 39.3 | 97.0 | 12.8 |
| Example 2 | 1A | 1.0 | 91.4 | 18.7 | 38.1 | 96.3 | 13.4 |
| Example 3 | 1A | 5.0 | 90.6 | 19.9 | 37.4 | 94.3 | 14.6 |
| Example 4 | 1B | 0.2 | 84.8 | 22.0 | 57.6 | 90.6 | 16.2 |
| Example 7 | 1C | 0.2 | 81.1 | 24.5 | 59.9 | 88.8 | 18.1 |
| Example 10 | 1D | 0.2 | 80.3 | 31.4 | 63.8 | 87.6 | 19.7 |
| Comparative Example 1 | - | - | 73.6 | 38.7 | 95.5 | 79.7 | 23.8 |
| Comparative Example 2 | Z1 | 0.2 | 75.8 | 36.2 | 120.3 | 79.8 | 28.3 |
| Comparative Example 5 | Z2 | 0.2 | 78.6 | 38.7 | 126.6 | 82.2 | 29.7 |
| Comparative Example 8 | Z3 | 0.2 | 75.2 | 36.6 | 128.2 | 77.8 | 29.1 |

According to the results of Table 2, it may be confirmed that the batteries, which used the electrolyte solutions of Examples 1 to 4, 7, and 10 including the compound of Formula 1, exhibited better results in all evaluation items, such as capacity and resistance characteristics after high-temperature storage, gas generation amount, and capacity and resistance characteristics after high-temperature cycles, than the batteries which used the electrolyte solutions of Comparative Examples 1, 2, 5, and 8 not including the compound of Formula 1 even if the negative electrode material was changed.

### <Experimental Example 3: Performance Evaluation of Battery Including NCM613 Positive Electrode Material>

### Experimental Example 3-0. Preparation of Lithium Secondary Battery

An electrode assembly was prepared in the same manner as in Experimental Example 1-0 except that a positive electrode active material having a composition of Li (Ni_{0.6}Co_{0.1}Mn_{0.3})O₂ was used instead of the positive electrode active material having a composition of Li (Ni_{0.8}Co_{0.1}Mn_{0.1})O₂ during the preparation of the positive electrode.

The electrode assembly prepared was accommodated in a pouch case, and each of the non-aqueous electrolyte solutions prepared in Examples 1 to 4, 7, and 10 and Comparative Examples 1, 2, 5, and 8 was injected thereinto to prepare a lithium secondary battery.

### Experimental Example 3-1. Measurement of Capacity and Resistance After High-temperature Storage

A capacity retention and a resistance increase rate were obtained for each lithium secondary battery prepared in Experimental Example 3-0 by performing the same process as in Experimental Example 1-1 except that the upper limit voltage was changed to 4.4 V instead of 4.3 V, and the results thereof are listed in Table 3 below.

### Experimental Example 3-2. Measurement of Gas Generation Amount After High-temperature Storage

A gas generation amount after high-temperature storage was obtained for each lithium secondary battery prepared in Experimental Example 3-0 by the same process as in Experimental Example 1-2 except that the upper limit voltage was changed to 4.4 V instead of 4.3 V, and the results thereof are presented in Table 3 below.

### Experimental Example 3-3. High-temperature Lifetime Evaluation

High-temperature lifetime was measured for each lithium secondary battery prepared in Experimental Example 3-0 by the same process as in Experimental Example 1-3 except that the upper limit voltage was changed to 4.4 V instead of 4.3 V, and the results thereof are presented in Table 3 below.

**[Table 3]**

| | Formula 1 | | Experimental Example 3-1 | | Experi mental Exampl e 3-2 | Experimental Example 3-3 | |
|---|---|---|---|---|---|---|---|
| | Structure | Amount (wt%) | Capacity retent ion (%) | Resistance increas e rate (%) | Gas genera tion amount (%) | Capacity retent ion (%) | Resistance increas e rate (%) |
| Example 1 | 1A | 0.2 | 92.3 | 18.5 | 41.5 | 96.5 | 13.5 |
| Example 2 | 1A | 1.0 | 90.1 | 19.8 | 42.2 | 95.1 | 18.6 |
| Example 3 | 1A | 5.0 | 88.2 | 20.9 | 39.6 | 94.2 | 19.7 |
| Example 4 | 1B | 0.2 | 82.7 | 22.1 | 97.5 | 89.4 | 20.3 |
| Example 7 | 1C | 0.2 | 80.3 | 28.5 | 61.1 | 87.7 | 22.5 |
| Example 10 | 1D | 0.2 | 76.2 | 33.6 | 63.3 | 85.5 | 23.7 |
| Comparative Example 1 | - | - | 71.4 | 39.7 | 97.2 | 78.6 | 24.5 |
| Comparative Example 2 | Z1 | 0.2 | 73.3 | 38.5 | 125.1 | 77.5 | 30.9 |
| Comparative Example 5 | Z2 | 0.2 | 75.5 | 39.6 | 129.4 | 81.1 | 32.2 |
| Comparative Example 8 | Z3 | 0.2 | 73.8 | 41.7 | 126.6 | 76.5 | 35.4 |

According to the results of Table 3, it may be confirmed that the batteries, which used the electrolyte solutions of Examples 1 to 4, 7, and 10 including the compound of Formula 1, exhibited better results in all evaluation items, such as capacity and resistance characteristics after high-temperature storage, gas generation amount, and capacity and resistance characteristics after high-temperature cycles, than the batteries which used the electrolyte solutions of Comparative Examples 1, 2, 5, and 8 not including the compound of Formula 1 even if the positive electrode material was changed.

## Claims

1. A non-aqueous electrolyte solution for a lithium secondary battery, comprising a lithium salt; an organic solvent; and a compound represented by Formula 1: 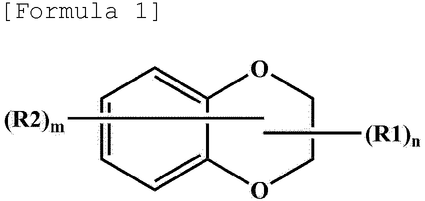 wherein, in Formula 1,
R1 is -COR, -COOR', -NCO, a nitrile group, an alkenyl group having 2 to 10 carbon atoms, or an alkynyl group having 2 to 10 carbon atoms,
R2 is a halogen group; -COR"; -COOR‴; -NCO; a nitrile group; an alkyl group having 1 to 10 carbon atoms which is unsubstituted or substituted with at least one halogen group; an alkenyl group having 2 to 10 carbon atoms; or an alkynyl group having 2 to 10 carbon atoms,
R, R', R", and R‴ are each independently hydrogen, an alkyl group having 1 to 10 carbon atoms, an alkenyl group having 2 to 10 carbon atoms, or an alkynyl group having 2 to 10 carbon atoms,
n is 1 or 2, and when n is 2, the two R1s are same or different from each other, and
m is an integer of any one of 0 to 8-n.

2. The non-aqueous electrolyte solution for a lithium secondary battery of claim 1, wherein R1 is -COR, -COOR', - NCO, or a nitrile group.

3. The non-aqueous electrolyte solution for a lithium secondary battery of claim 1, wherein R and R' are each independently an alkyl group having 1 to 10 carbon atoms or an alkynyl group having 2 to 10 carbon atoms.

4. The non-aqueous electrolyte solution for a lithium secondary battery of claim 1, wherein the compound represented by Formula 1 is represented by Formula 1-1: 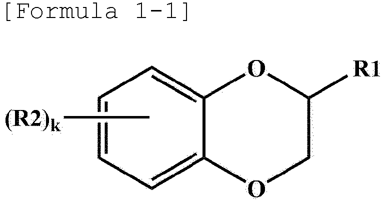 wherein, in Formula 1-1,
R1 and R2 are as defined in Formula 1, and
k is an integer of 0 to 4.

5. The non-aqueous electrolyte solution for a lithium secondary battery of claim 1, wherein an amount of the compound represented by Formula 1 is in a range of 0.1 wt% to 5 wt% based on a total weight of the non-aqueous electrolyte solution.

6. The non-aqueous electrolyte solution for a lithium secondary battery of claim 1, wherein an amount of the compound represented by Formula 1 is in a range of 0.15 wt% to 3 wt% based on a total weight of the non-aqueous electrolyte solution.

7. The non-aqueous electrolyte solution for a lithium secondary battery of claim 1, further comprising at least one additive selected from the group consisting of vinylene carbonate, vinyl ethylene carbonate, fluoroethylene carbonate, succinonitrile, 1,3,6-hexanetricarbonitrile, lithium difluoro(oxalato)borate, lithium tetrafluoroborate, 1,3-propane sultone, prop-1-ene-1,3-sultone, ethylene sulfate, and lithium difluorophosphate.

8. The non-aqueous electrolyte solution for a lithium secondary battery of claim 1, wherein the organic solvent comprises a mixture of at least two selected from the group consisting of a cyclic carbonate-based solvent, a linear carbonate-based solvent, and a linear ester-based solvent.

9. A lithium secondary battery comprising:
a positive electrode including a positive electrode active material;
a negative electrode including a negative electrode active material;
a separator disposed between the positive electrode and the negative electrode; and
the non-aqueous electrolyte solution of claim 1.

10. The lithium secondary battery of claim 9, wherein the positive electrode active material comprises a lithium composite transition metal oxide represented by Formula 2:
[Formula 2] Li₁₊ₓ(NiₐCo_{b}Mn_{c}M_{d})O₂
wherein, in Formula 2,
M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
1+x, a, b, c, and d are atomic fractions of each independent elements,
wherein -0.2≤x≤0.2, 0.6≤a<1, 0<b≤0.3, 0<c≤0.3, 0≤d≤0.1, and a+b+c+d=1.

11. The lithium secondary battery of claim 10, wherein a, b, c, and d in Formula 2 satisfy 0.70≤a<1, 0<b≤0.2, 0<c≤0.2, and 0≤d≤0.1, respectively.

12. The lithium secondary battery of claim 9, wherein the negative electrode active material comprises a silicon-based material.

13. The lithium secondary battery of claim 12, wherein the negative electrode active material consists of silicon.
